# EUROPEAN PATENT APPLICATION

(11) **EP 1 972 238 A2**
(43) Date of publication of application: **24.09.2008**
(21) Application number: 08012286.4
(22) Date of filing: 29.01.2007
(51) Int. Cl.: A47J 27/21, A47J 36/02, F28F 13/18

(54) **Heaters for liquid heating vessels**

(30) Priority: 27.01.2006 GB 0601647
(62) Divisional of application: 07250362.6
(71) Applicant: STRIX LIMITED, Ronaldsway, Isle of Man IM9 2RG (GB)
(72) Inventor: Scott, Michael James, Onchan Isle of Man IM3 2AU (GB); Felmeri, Ian, Castletown Isle of Man IM9 1BD (GB)
(74) Representative: Samuels, Adrian James

(57) **Abstract**

An electric liquid heater comprises a hydrophobic coating layer (6) on the liquid-facing surface of the heater. The hydrophobic coating layer (6) forms a textured surface the texture of which is such as to disrupt the growth of bubbles on the surface. The surface texture features comprise cracks (10) in the surface of the coating layer (6).

## Description

This invention relates to electric liquid heaters and to vessels incorporating such heaters, in particular heaters which are adapted to reduce the amount of noise generated during heating.

Over recent years, the demand for shorter heating times in kettles and jugs has lead to an increase in the power of a typical heater from around 2.2 kW to around 3 kW. This power increase has been achieved without increasing the size of the heater so that the appliance does not need to be made larger to accommodate a larger heater. Thus the increase in heating power has lead to an increase in the power density applied to the heater's surface. This has, in turn, modified the process of heat transfer between the heater and the water being heated.

The change in the heating process has resulted in an increase in the noise generated by kettles and jugs during heating, often due to the incidence of local nucleate boiling. This noise is generally considered undesirable.

It is desirable to provide an effective, cost efficient heater which produces lower levels of noise during liquid heating.

The present invention seeks to provide an improved heater and from a first aspect provides an electric liquid heater comprising a hydrophobic coating layer on the liquid-facing surface of the heater, said hydrophobic coating layer forming a textured surface the texture of which is such as to disrupt the growth of bubbles on the surface.

It will be appreciated that the hydrophobic coating inhibits wetting and therefore encourages the formation of vapour bubbles on the heater surface. However, the texture features formed by the textured surface coating can prevent bubbles formed on the surface from growing too large so that bubbles of a smaller average size are produced. The growth of bubbles, e.g. as a result of nucleate boiling, can therefore be limited. It will be appreciated that reducing the size of the bubbles released from the heater surface will tend to result in lower noise levels being generated.

An effective noise reduction is achieved by the texture features of the hydrophobic coating layer since these texture features give rise to abrupt changes at a micro-level in surface tension. The Applicant has realised that this effect on bubble growth can be achieved simply and cost-effectively by applying a hydrophobic coating material to the heater surface, in such a way that the coating layer has a surface micro-texture. Thus in accordance with the invention it is possible to manufacture reduced noise heaters without using expensive multi-phase coatings or complicated multi-layer coating processes.

A further advantage of heaters made in accordance with the invention is that the maximum size of the bubbles and the frequency of their detachment from the heater surface can be controlled to some extent by the dimensions of the features of the textured surface. For example if the texture is regular, the bubbles produced will be of roughly the same size and sound produced in a narrow frequency band; whereas if the texture is irregular the sound will be spread across a wider band. Of particular advantage is that arrangements in accordance with the invention can reduce the incidence of large-scale film boiling since any vapour blanket formed will be curtailed by the presence of features in the surface texture. Film boiling is undesirable since the resultant layer of air/steam reduces heat transfer from the heater to the liquid and therefore makes the heater tend to overheat; and it makes thermal sensors in contact with the heater relatively more sensitive to the element temperature than to the liquid temperature and hence there will be a tendency for premature operation of the control, for example switching off a kettle before the water has reached boiling point.

It will be understood that a textured surface in accordance with the invention may take many different forms, merely having in common that the surface level is not constant across the heater surface. The textured surface may have a topography including peaks or valleys. The features may involve changes in the surface profile or breaks in the surface. The features constituting the surface texture may be distributed evenly, unevenly or randomly across the surface. The features may be distinct or extended, discrete or continuous. For example, the texture may be formed by a plurality of indentations in the surface or by a network of breaks; or the texture may be formed by distinct raised features on the surface or a continuous profiling. The texture may comprise any combination of such surface features.

Many possible ways of achieving a textured surface can be envisaged, including mechanical, thermal or chemical treatment, laser patterning or post-processing of the coating layer. Preferably, the hydrophobic coating layer forms a textured surface as a result of its method of application. This means that the noise reducing properties of the coating layer can be controlled simply by adjusting the way that the coating is applied, to produce the required surface features. For instance, the coating may be deposited unevenly on the heater surface, a mask may be used to control the coating coverage, or it may be applied in more than one layer or deposition cycle. The coating layer may be applied by spray deposition, roller coating or curtain coating.

In some preferred embodiments the textured coating layer is printed onto the heater surface. Preferred printing techniques, such as inkjet or tampo printing, can produce a textured coating layer very quickly and easily. Tampo printing, which uses a synthetic pad to transfer the textured coating, can be particularly useful if the heater surface is not flat. This is considered novel and inventive in its own right and thus when viewed from another aspect the invention provides a method of treating the liquid facing surface of an electric heater comprising printing a hydrophobic coating layer onto the heater so as to form a textured surface. Preferably the textured surface comprises features which disrupt the growth of bubbles on the surface.

Alternatively, the coating may have a textured surface as a.result of mechanical and/or thermal treatment before, during or after application of the coating layer to the heater surface. Mechanical treatment of the coating layer may include sand or grit blasting, chipping, drilling, stamping, engraving or etching. Preferably, however, the coating layer is heat treated to produce a surface texture. Heat treatment may already be required to dry and/or fire the coating. It is therefore advantageous if such thermal processing steps can be adapted to control the final surface finish of the coating. In certain preferred embodiments, the coating layer is heat treated to produce cracks in the coating. It is therefore preferred in accordance with the first aspect of the invention that the surface texture features comprise cracks in the surface of the coating layer.

The Applicants have found that cracking can easily be promoted by firing the coating layer at temperatures of 280-400 °C. The cracking results from flexing of the heating element during the firing stage. Furthermore, thermal control of the coating surface texture need not necessarily stop once the coating application process is complete. Expansion and flexing of the heater itself, typically a stainless steel heater plate having a sheathed heating element brazed to its underside, during heating operations, especially dry-switch on, can promote the formation of cracks as well as maintaining them open. This might therefore take place automatically during appliance testing.

The Applicants have appreciated that generating cracks in a hydrophobic coating layer provides a particularly simple technique of introducing a micro-scale surface texture without requiring additional processing steps. The technique is considered novel and inventive in its own right and thus when viewed from a further aspect the present invention provides a method of treating the liquid facing surface of an electric heater comprising providing the heater surface with a hydrophobic coating layer and treating the coating layer to produce cracks in the coating.

From a yet further aspect the invention provides an electric liquid heater comprising a hydrophobic coating layer on the liquid-facing surface of the heater, said hydrophobic coating layer comprising cracks disrupting the growth of bubbles on the surface.

The treatment applied may be any suitable one which results in cracking - for example mechanical shock or chemical treatment. Preferably however the treatment comprises heat treatment.

The resultant coating layer has a surface which is made up of undisrupted islands separated by cracks. The cracks can act as features limiting the growth of bubbles on the heater surface so that bubbles of a smaller average size are produced, resulting in a quieter heater. It will be appreciated that the cracks do not need to break all the way through the coating layer to achieve this effect.

Treatment of the coating layer to produce cracks is preferably controlled to produce coating regions of about 40 to 400 µm in size between the cracks. The size of the unbroken coating regions between cracks can dictate the size of the bubbles formed.

In certain embodiments the treatment is controlled to produce a substantially regular pattern of coating regions of a similar size separated by cracks. This will tend to result in the formation and.release of vapour bubbles of a consistent size, which can lead to sound being produced across a narrow frequency band.

In other embodiments the treatment is controlled to produce a substantially irregular pattern of differently sized coating regions separated by cracks. This will tend to produce bubbles of varying sizes, resulting in noise that is spread across a wide frequency band.

The treatment may be used to affect the width of cracks produced. Preferably the heat produces cracks of size 0.1 to 2 µm, the average size being about 1µm. The cracks may grow to about the same width or the treatment may result in cracks which vary in width.

The textured coating, produced by cracking or another suitable means, could be completely exposed, but in some preferred embodiments an over-layer is applied. The over-layer may be of the same or a different material. The over-layer could be continuous and thin enough to conform to the underlying textured profile; or discontinuous, entering the cracks and leaving the 'islands' exposed. In the latter case if the materials have a difference in surface tension, this could also contribute to the disruption of bubble growth.

As will be understood from the foregoing, it is preferable that the hydrophobic coating layer forms a textured surface having features which are separated on the micro-scale by distances of the order 40 to 400 µm. Preferably the regions of coating extending between features of the surface texture are much larger in size than the features themselves. For example, the islands of coating between cracks are preferably at least an order of magnitude larger in size than the crack width.

Instead of the coating layer undergoing a mechanical or thermal treatment, the underlying heater substrate may be treated so as to influence the surface micro-texture of the coating when applied to the heater. For example, the heater surface itself may be textured by moulding, drawing, etching, stamping, engraving or drilling. The underlying heater surface texture may simply imprint a texture onto the hydrophobic coating layer. Alternatively, the nature of the heater surface may cause the coating layer to dry unevenly or it may affect the deposition process in such a way that the resulting coating layer is textured.

The Applicant has further appreciated that the idea of utilising the underlying texture of the actual heater plate can be extended to give a further advantageous arrangement.

From a further aspect the present invention provides an electric liquid heater comprising a roughened surface and a hydrophobic coating layer partially covering the roughened surface such that peaks in said roughened surface are exposed to liquid in use.

From a yet further aspect the invention provides a method of treating the liquid facing surface of an electric heater comprising roughening the heater surface and applying a hydrophobic coating layer to the heater surface so as partially to cover it such that peaks in the roughened surface are exposed to liquid in use.

It will be understood that this aspect of the invention may be combined with the previously described aspects, i.e. to provide a heater comprising a roughened surface and a hydrophobic coating layer partially covering the roughened surface such that peaks in the roughened surface are exposed to liquid in use, the hydrophobic coating layer forming a textured surface the texture of which is such as to disrupt the growth of bubbles on the surface.

The Applicants have appreciated that where peaks on the roughened surface are exposed, they will act as nucleation sites for bubbles. By judicious,choice of the relative thicknesses of the surface roughness and the hydrophobic coating, a dense array of these nucleation sites is produced which encourages the formation of a very large number of small bubbles, which minimises noise. Furthermore expansion of bubbles on the coated surface is limited because the change in surface tension present at the boundaries between the hydrophobic coating layer and the exposed peaks will tend to promote release of the bubbles from the surface. Thus bubbles of a smaller average size can be produced simply by exploiting the underlying heater surface roughness, while still providing a heater having a hydrophobic coating layer on its liquid-facing surface which can resist scale adhesion and improve the visual appearance of the heater. The exposed heater surface forms a micro-array of nucleation sites.

The coating layer is sufficiently thin that the roughened surface is at least partially exposed to liquid in use. In other words, the coating layer fills pits in the heater surface while the surface peaks are left exposed. These peaks can act as preferential nucleation sites for vapour bubbles, encouraging the formation of many small bubbles across the heater surface, while the bulk of the liquid-facing surface is covered with hydrophobic coating to resist scale adhesion. It will be appreciated, therefore, that such a heater represents an improvement over a roughened heater surface that is uncoated and therefore prone to the build-up of scale.

In other, less preferred, embodiments the coating layer is treated to expose the underlying heater surface roughness. For example, the coating layer may be applied so as to completely cover the heater surface and then it may be sanded, blasted, erased, eroded, etched or otherwise partially removed to allow some parts of the heater surface to be exposed to liquid in use.

There will now be described some general features of the hydrophobic coating layer in accordance with all of the above-described embodiments.

The heater may comprise a single hydrophobic coating layer on its liquid-facing surface. This is preferred in embodiments where the coating layer must be thin enough as to at least partially expose the underlying surface roughness of the heater. In other embodiments, it is preferable that the heater is coated with a base layer applied underneath the textured hydrophobic coating layer. A base layer can be used to increase adhesion of the hydrophobic coating layer to the heater surface.

It is also preferable that the heater is coated with a top layer applied over the textured hydrophobic coating layer, either with or without a base layer. The top coat can protect the surface texture of the coating layer and prevent it from being damaged or worn away. A top coat is preferred where the hydrophobic coating layer is cracked and may need stabilising. The top layer is preferably thin so that the textured surface of the underlying coating layer is not masked by the top layer. Preferably the top layer also comprises a hydrophobic coating to promote bubble formation between the surface features. Further preferably the top layer is scale resistant.

Except where they are mutually exclusive from a technical point of view, all of the individual features set out hereinabove may be provided in any and all combinations within the scope of the invention.

Any suitable kind of hydrophobic coating may be used. Preferably the coating has a water contact angle between 80° and 170°, preferably above 90°. This reduces the wetting of the coated surface so that bubbles are more likely to form.

Preferably the hydrophobic coating resists scale adhesion. The presence of scale on a heater surface results in an undesirable appearance and can also cause the running temperature of the heater detrimentally to increase. This can lead to premature operation of a thermally sensitive control associated with the heater - an effect known as dry boil interference. Moreover the adhesion of scale to a heater surface can result in increased noise levels. A scale shedding additive such as PTFE may be added to the coating. However it is preferred that silicon based hydrophobic coatings are used. A coating which has been found to be suitable is X10106 produced by Akzo Nobel.

Silicon based coatings are also favoured because it has been found that PTFE-based coatings are less suitable for heaters which could undergo dry switch-on conditions, because the high temperature rise seen on the surface above the element during dry switch-on causes the coating to degrade. The Applicants have found that with PTFE-based coatings the noise reducing effect can degrade markedly over the first 100 boil cycles of a typical kettle heater.

It is preferable that the coating comprises a pure silicon resin rather than containing amounts of Si oil (as is common in non-stick bakeware coatings for example) as it has been found that the presence of Si oil can result in film boiling.

The coating layer(s) may be applied to the heater surface by any suitable method, for example spraying, dipping, printing, roller or curtain coating. The liquid-facing surface of the heater may not be planar but may include surfaces which are curved, stepped or otherwise profiled. The method used to apply the coating may be chosen or adapted according to whether or not the heater surface is flat.

The invention also extends to a liquid heating vessel, preferably a water boiling appliance, comprising any of the heaters described hereinabove.

Some preferred embodiments of the invention will now be described, by way of example only, with reference to the accompanying drawings in which:
Fig. 1a is a perspective view of a heater comprising a cracked coating layer on its liquid-facing surface in accordance with a first embodiment;
Fig. 1b is a plan view of the heater of Fig. 1a showing an enlargement of part of the heater surface;
Fig. 1c is a sectional side view of the heater of Fig. 1a showing an enlargement of part of the heater;
Fig. 2a is a perspective view of a heater comprising a cracked coating layer on its liquid-facing surface in accordance with a second embodiment;
Fig. 2b is a plan view of the heater of Fig. 2a showing an enlargement of part of the heater surface;
Fig. 2c is a sectional side view of the heater of Fig. 2a showing an enlargement of part of the heater;
Fig. 3a is a perspective view of a heater comprising a cracked coating layer on its liquid-facing surface in accordance with a third embodiment;
Fig. 3b is a plan view of the heater of Fig. 3a showing an enlargement of part of the heater surface;
Fig. 3c is a sectional side view of the heater of Fig. 3a showing an enlargement of part of the heater;
Fig. 4a is a perspective view of a heater comprising a cracked coating layer on its liquid-facing surface in accordance with a fourth embodiment;
Fig. 4b is a plan view of the heater of Fig. 4a showing an enlargement of part of the heater surface;
Fig. 4c is a sectional side view of the heater of Fig. 4a showing an enlargement of part of the heater;
Fig. 5a is a perspective view of a heater comprising a cracked coating layer on its liquid-facing surface in accordance with a fifth embodiment;
Fig. 5b is a plan view of the heater of Fig. 5a showing an enlargement of part of the heater surface;
Fig. 5c is a sectional side view of the heater of Fig. 5a showing an enlargement of part of the heater;
Fig. 6a is a perspective view of a heater comprising an exposed grit blasted surface in accordance with a further embodiment;
Fig. 6b is a plan view of the heater of Fig. 6a showing an enlargement of part of the heater surface; and
Fig. 6c is a sectional side view of the heater of Fig. 6a showing an enlargement of part of the heater.

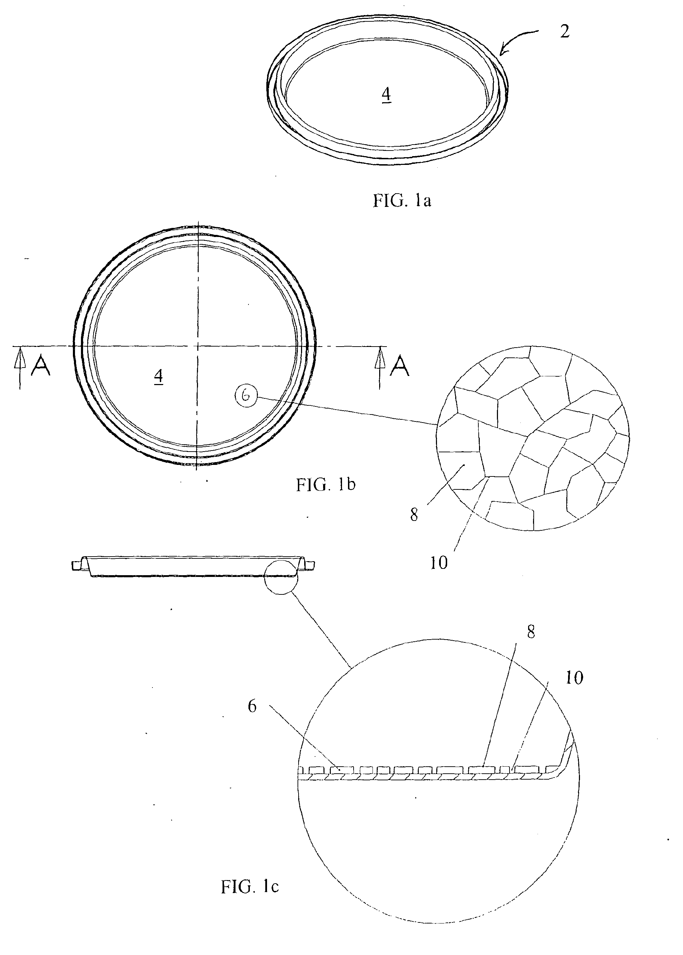

Turning firstly to Fig. 1 there may be seen an electric liquid heater 2 in accordance with the invention. The heater 2 is adapted to close an opening in the base of a liquid heating vessel such as domestic water boiling kettle. The heater 2 comprises the Applicant's standard-form Sure Seal stainless steel heater plate 4 which has a peripheral channel to allow it to be clamped to the lower edge of a vessel wall as is described in WO 96/18331. Either a sheathed electrical heating element or a thick film heating element may be formed on or attached to the underside of the heater plate 4.

As shown in the enlargements to Figs. 1b and 1c, the surface of the heater plate 4 is covered with a cracked hydrophobic coating layer 6. The coating is a 2-30 µm thick layer of X10106 available from Akzo Nobel. It will be seen that the coating layer 6 comprises regions 8 of unbroken coating separated by cracks 10. The cracks 10 are at least 0.1 µm wide.

The method of forming the cracked coating will now be described. Typically the stainless steel heater plate 4 is first prepared for coating by grit blasting to a roughness of 1.5-3.0 Ra. The plate 4 is degreased and a layer of coating is applied to its surface by spraying. The heater plate is fired in a furnace at 100-150°C to dry the wet coating layer and then fired at 280-400°C to promote cracking. The resultant coating layer comprises regions 8 which are 40 to 400µm in size separated by a network of cracks 10 of size 0.1 to 2µm.

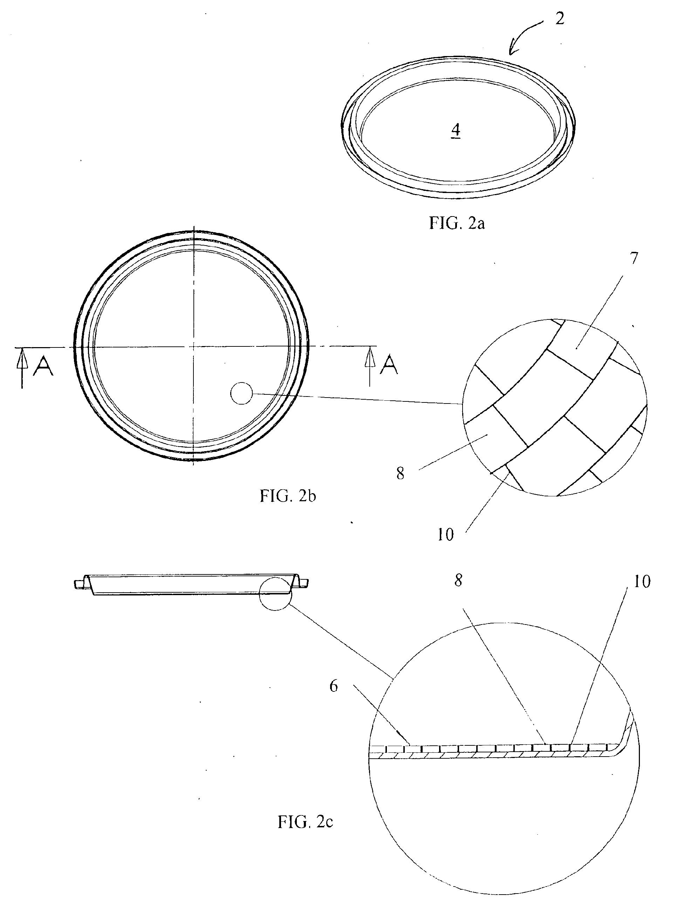

Fig. 2 shows an embodiment similar to Fig. 1 wherein the cracks 10 in the hydrophobic coating layer 6 form a regular pattern 7 of unbroken coating regions 8 all of substantially the same size and separated by cracks 10 of substantially the same width. The regular pattern results in the formation and release of vapour bubbles of a consistent size, producing a sound which is limited to a narrow frequency band.

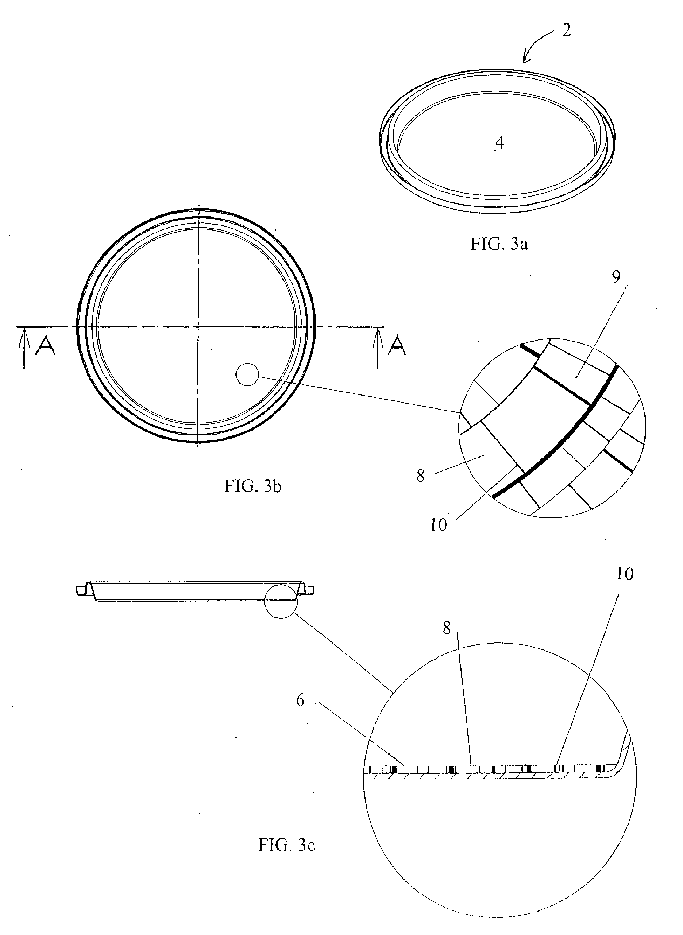

Fig. 3 shows another embodiment similar to Fig. 1 wherein the cracks 10 in the hydrophobic coating layer 6 form an irregular pattern 9 of differently sized coating regions 8 separated by cracks 10 of different widths. The irregularity in the surface texture produces bubbles of varying sizes, resulting in noise that is spread across a wide frequency band.

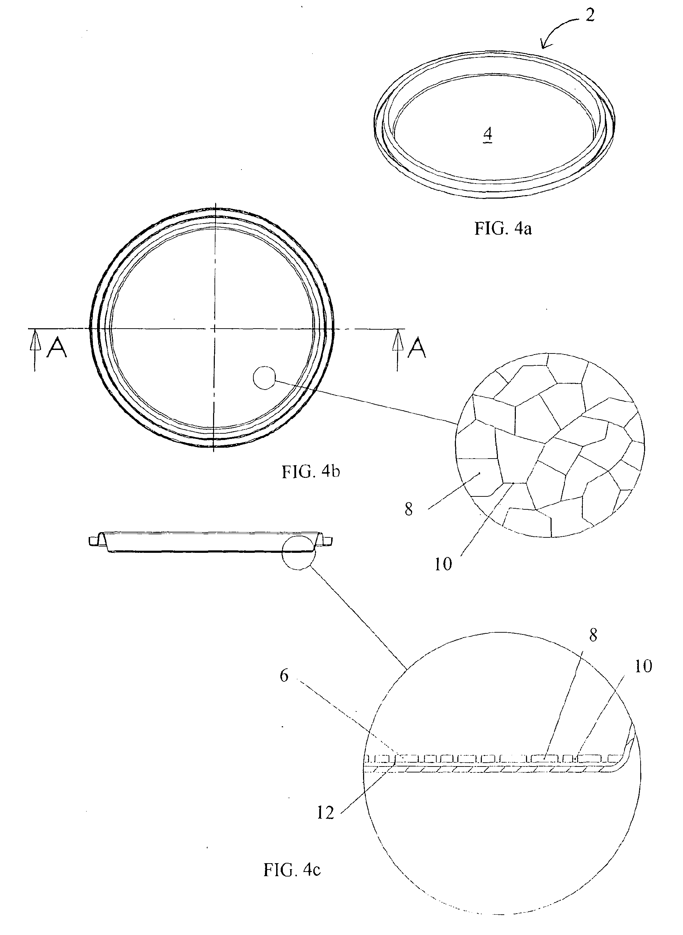

Fig. 4 shows an embodiment that is similar to Figs. 1-3 except the heater plate 4 has a base coat 12 on its surface underneath the cracked hydrophobic coating layer 6. The base coat 12 acts to enhance adhesion of the hydrophobic coating layer 6 to the stainless steel plate 4. The base coat 12 is a modified layer of X10106 containing a polyester co-polymer or an epoxy modifier. The base coat 12 is applied to the surface of the heater plate 4 before applying the cracked hydrophobic coating layer 6. The presence of the co-polymer or epoxy in the base coat 12 prevents it from cracking when the heater undergoes firing. An epoxy modifier has been found to be most robust.

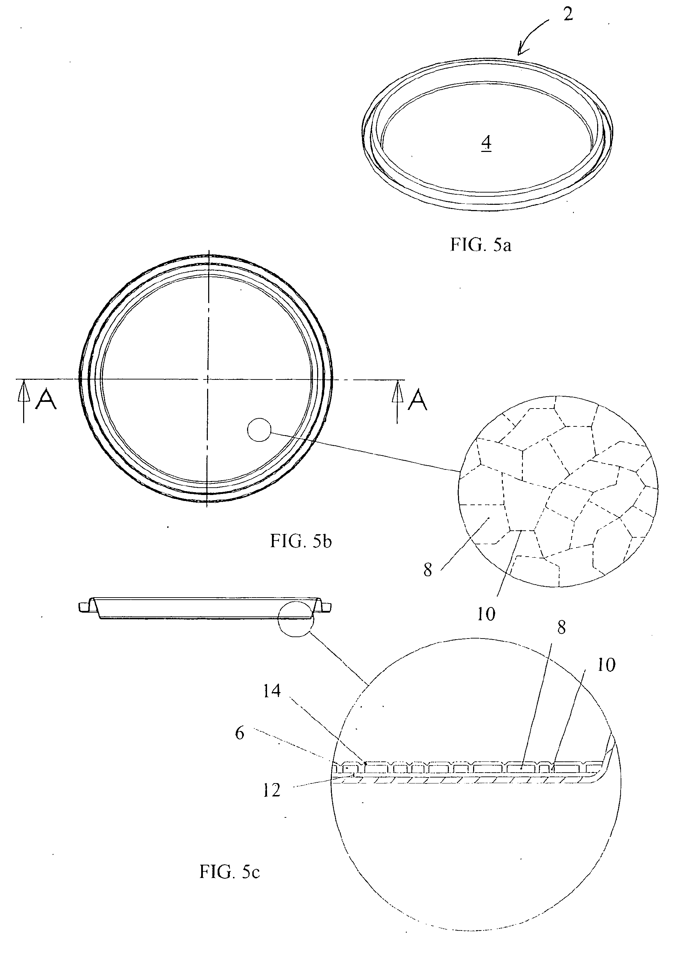

Fig. 5 shows an embodiment that is similar to Fig. 4 except in this embodiment a top coat 14 covers the liquid-facing surface of the cracked hydrophobic coating layer 6. It will be seen that the top coat 14 is relatively thin compared to the hydrophobic coating layer 6 and compared to the depth of the cracks 10, so that the surface texture resulting from the cracks 10 is mirrored in the top coat 14 and thus the liquid-facing top surface is provided with features disrupting the growth of bubbles on the surface. The top coat 14 protects the cracked coating layer 6. The top coat 14 is a modified layer of X10106 containing a polyester co-polymer or an epoxy modifier. The top coat 14 is applied separately over the hydrophobic coating layer 6. The presence of the co-polymer or epoxy in the top coat 14 prevents it from cracking when the heater undergoes firing. An epoxy modifier has been found to be most robust.

It will be appreciated that although the cracks 10 are shown as completely penetrating the hydrophobic coating layer 6 in the above embodiments, this is not necessary for the noise reduction effect and the cracks may not be as deep as the coating layer.

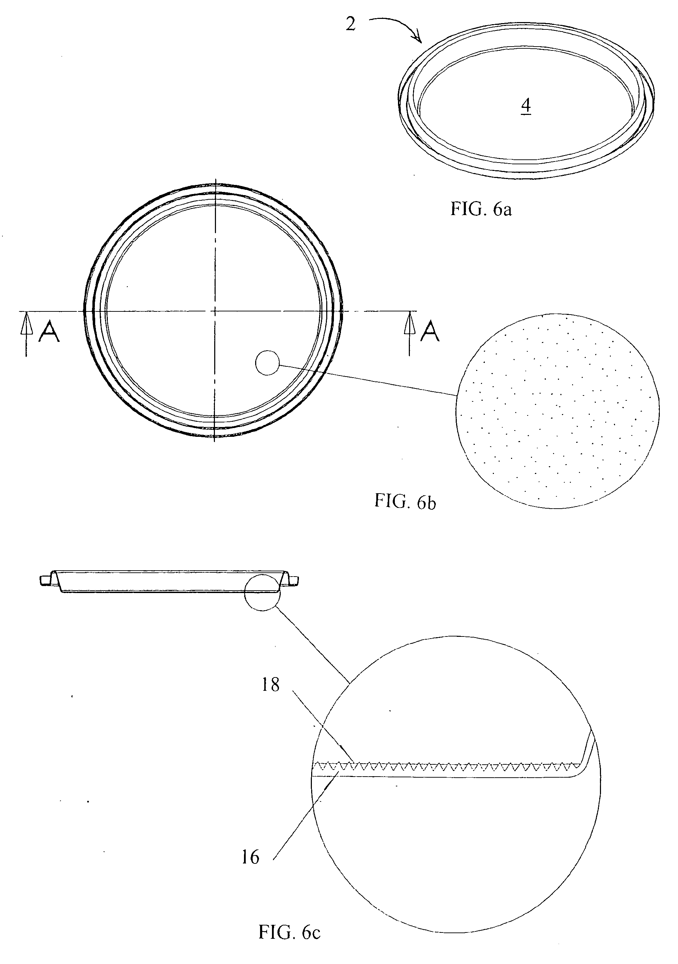

There is shown in Fig. 6 another embodiment in which the heater plate 4 has a grit blasted surface 16 which is exposed through a layer of hydrophobic coating 18. The hydrophobic coating 18 is a modified layer of X10106 containing a polyester co-polymer or an epoxy modifier. The hydrophobic coating 18 is only slightly thinner than the height of the peaks on the grit blasted surface 16. The exposed peaks of the grit blasted surface 16 act as nucleation sites for bubbles while the hydrophobic coating resists the adhesion of scale to the heater. Although not shown, a base coat may be applied as long as the grit blasted surface 16 is at least partially exposed through the coating layer(s).

Although the present invention has been described with reference to preferred embodiments, it will be understood by those skilled in the art that various changes may be made without departing from the scope of the invention. For example, the hydrophobic coating layer need not be cracked as shown but could instead form a textured surface as a result of being etched, engraved or otherwise treated. The noise reduction effect can be achieved by any hydrophobic coating forming a micro-textured surface having features disrupting the growth of bubbles on the heater surface. The coating layer can be printed onto the heater surface so as to have the required texture.

## Claims

1. An electric liquid heater comprising a hydrophobic coating layer on the liquid-facing surface of the heater, said hydrophobic coating layer comprising cracks disrupting the growth of bubbles on the surface.

2. A heater as claimed in claim 1 comprising coating regions in the range 40 and 400 µm in size between the cracks.

3. A heater as claimed in claim 1 or 2 wherein said cracks are in the range of 0.1 to 2 µm in width.

4. A heater as claimed in any of claims 1, 2 or 3 wherein the average width of the regions between the cracks is at least ten times the average width of the cracks.

5. A heater as claimed in any preceding claim comprising a single hydrophobic coating layer on its liquid-facing surface.

6. A heater as claimed in any of claims 1 to 4 comprising a base layer underneath the textured hydrophobic coating layer and/or a top layer over the textured hydrophobic coating layer.

7. A heater as claimed in claim 6 wherein the top layer also comprises a hydrophobic coating and/or wherein the top layer is scale resistant.

8. A heater as claimed in any preceding claim wherein said hydrophobic coating is silicon based, preferably comprising a pure silicon resin.

9. A liquid heating vessel, preferably a water boiling appliance, comprising a heater as claimed in any preceding claim.

10. A method of treating the liquid facing surface of an electric heater comprising providing the heater surface with a hydrophobic coating layer and treating the coating layer to produce cracks in the coating.

11. A method as claimed in claim 10 wherein the treatment comprises heat treatment.

12. A method as claimed in claim 10 or 11 comprising controlling said treatment to produce coating regions in the range 40 to 400 µm in size between the cracks.

13. A method as claimed in claim 10, 11 or 12 comprising controlling said treatment to produce cracks in the range 0.1 to 2 µm in width.

14. A method as claimed in any of claims 10 to 13 comprising controlling the treatment such that the average width of the regions between the cracks is at least ten times the average width of the cracks.

15. A method as claimed in any of claims 10 to 14 comprising applying an over-layer over the textured coating.
